Europäisches Patentamt

European Patent Office

Office européen des brevets

(19)

(11) Veröffentlichungsnummer: **0 210 999**
**B1**

(12) **EUROPÄISCHE PATENTSCHRIFT**

(45) Veröffentlichungstag der Patentschrift:
23.08.89

(21) Anmeldenummer: 86900044.8

(22) Anmeldetag: 24.12.85

(86) Internationale Anmeldenummer:
PCT/CH 85/00181

(87) Internationale Veröffentlichungsnummer:
WO 86/03943 (17.07.86 Gazette 86/17)

(51) Int. Cl.⁴: **A 23 L 1/234**, A 23 L 1/237

(54) VERFAHREN ZUR HERSTELLUNG VON NEUEN KAFFEE-AROMASTOFFEN.

(30) Priorität: 10.01.85 CH 96/85
13.12.85 CH 5331/85

(43) Veröffentlichungstag der Anmeldung:
25.02.87 Patentblatt 87/9

(45) Bekanntmachung des Hinweises auf die Patenterteilung:
23.08.89 Patentblatt 89/34

(84) Benannte Vertragsstaaten:
CH DE FR GB LI NL

(56) Entgegenhaltungen:
FR-A-1 206 821
US-A-3 102 817

(73) Patentinhaber: L. GIVAUDAN & CIE Société
Anonyme, CH- 1214 Vernier- Genève (CH)

(72) Erfinder: KRASNOBAJEW, Victor, Zürichstrasse
125 a, CH- 8700 Küsnacht (CH)
Erfinder: MOR, Juan- Ramon, In der Sommerau 15,
CH- 8053 Zürich (CH)
Erfinder: STEINER, Rudolf, Bungertweg 9, CH- 8303
Basserdorf (CH)
Erfinder: KELLER, Alfred, Rothstrasse 4, CH- 8057
Zürich (CH)

(74) Vertreter: Urech, Peter, Dr., Grenzacherstrasse 124
Postfach 3255, CH- 4002 Basel (CH)

EP 0 210 999 B1

**Beschreibung**

Es ist bekannt, durch Rösten natürlicher Pflanzenteile (z. B. bis auf Temperaturen von 180 - 240° C) Kaffee-Ersatzstoffe (Kaffeesurrogate) und Kaffee-Zusatzstoffe (Kaffeegewürze) herzustellen (Ullmanns Encyklopädie der technischen Chemie, Verlag Chemie, Weinheim, 4. Auflage, Band 13, (1977), Seiten 429 - 440). Mit heissem Wasser liefern diese Surrogate kaffeeähnliche Getränke. Die Kaffee-Zusatzstoffe werden gleichfalls durch Rösten von Pflanzenteilen sowie von zuckerhaltigen Rohstoffen erhalten. Als Rohstoffe geeignet sind Wurzeln, Früchte und Samen. Beispiele sind Gerste, Roggen, Zichorie, Zuckerrüben, Feigen, Johannisbrot, Erdnusskerne, Sojabohnen, Mandeln und geschälte Eicheln. Die Kaffee-Ersatzmischungen kommen gemahlen in den Verkehr. Keine der bisher bekanntgewordenen diesbezüglichen Mischungen hat jedoch organoleptisch zu befriedigen vermocht. Insbesondere mangelt den Mischungen geruchlich und geschmacklich der echte Kaffeecharakter, und die Aromastärke lässt ebenfalls oft zu wünschen übrig. Diesbezüglich bringen auch die neueren - weiter unten beschriebenen - einschlägigen Verfahren keinerlei Verbesserung.

Es wurden nun diesbezügliche Produkte gefunden, denen diese Nachteile nicht anhaften. Als Rohstoffquelle für diese neuen Stoffe dient Sojamehl, und zwar (möglichst weitgehend) entfettetes Sojamehl, aus dem die neuen Kaffeearomastoffe nach einem neuartigen Verfahren erhältlich sind.

Die Erfindung betrifft demgemäss ein Verfahren zur Herstellung von neuen Kaffee-Aromastoffen, das dadurch gekennzeichnet ist, dass man Sojamehl enzymatisch proteolysiert, und zwar unter Verwendung von Proteasen mikrobiellen Ursprungs in einem Temperaturbereich von 30 - 60° C, das Proteolysat auf 140° - 200° C erhitzt und das erhaltene wasserlösliche Material aus dem Reaktionsgemisch isoliert und zwar unter Zuhilfenahme von Druckfiltern, Filternutschen, Dekantern, Mikro- oder Ultrafiltern, oder mittels Zentrifugen. Die Erfindung betrifft weiterhin Geschmackstoffkompositionen, die durch einen Gehalt an diesen neuen Kaffee-Aromastoffen gekennzeichnet sind, als auch Nahrungs- und Genussmittel, die derartige Kaffee-Aromastoffe bzw. Geschmackstoffkompositionen enthalten, als auch die Verwendung der neuen Geschmackstoffkompositionen bzw. Kaffee-Aromastoffe zur Aromatisierung von Nahrungs- und Genussmitteln bzw. als Kaffee-Ersatzstoffe.

Die Herstellung von Sojamehl und seine Entfettung, beispielsweise mit Hexan, ist z. B. in J. Schorrmüller, Kohlenhydratreiche Lebensmittel, Springer-Verlag Berlin (1967), 395 seq. oder in Food Technology, October 1982, 122, 123 beschrieben.

Als Sojamehl wird vorzugsweise das Produkt möglichst feingemahlener [dies erlaubt den Enzymen den guten Zugang zu den Sojaproteinen], [weitgehend] entfetteter Sojabohnen, z. B. die Qualität Sojafluff W 200 der Firma Central Soja, Indiana, Illinois verwendet. Dieses Material ist "nicht getoastet". Aber auch "getoastetes" Material kann eingesetzt werden, z. B. Material der ESO-Chemie (Hamburg) oder der Stern-Chemie (Hamburg).

Die enzymatische Proteolyse kann zwar mit üblichen proteolytischen aktiven Enzymen (Proteasen) durchgeführt werden. Als Proteasen verwendet werden aber erfindungsgemäss Proteasen mikrobiellen Ursprungs (z. B. Rhozym, z. B. Typ P-53 oder P-41 von Genencor Inc., Corning, N.Y.) oder Neutrase (von Novo Industri, Bagsvaerd, Dänemark), welche Enzyme wässrige Suspensionen von Sojaprodukten in relativ kurzer Zeit proteolysieren, d.h. die Sojaproteine relativ rasch zu Peptiden und Aminosäuren abzubauen vermögen. Proteasen mikrobiellen Ursprungs sind darum gut geeignet, denn damit wird im vorliegenden Fall ein besonders gutes Kaffee-Aroma erzielt.

Eine Zusammenstellung der üblichen, proteolytisch aktiven Fermente (Enzyme) findet sich beispielsweise in Tony Godfrey and Jon Reichelt, industrial Enzymology, The Application of Enzymes in Industry, The Nature Press and Mc Millan Publ. Ltd. (1983) 466 seq. und in Gerald Reed, Enzymes in Food Processing, Academic Press NY and London, (1966), 148 seq.

Eine geeignete Enzymkonzentration kann durch ein sensorisches Experiment, also durch Verköstigung, leicht ermittelt werden und beträgt zweckmässigerweise ca. 0.1 - 1 Gew.-% Enzym, bezogen auf die Menge des Sojamehls. Die Inkubationsdauer soll aus ökonomischen Gründen nicht zu lang sein. Sie soll in der Regel - unter den im folgenden gegebenen Bedingungen ermittelt, - ca. 1 - 24 Stunden nicht überschreiten.

Der Ermittlung selbst erfolgt nach üblichen Methoden der Bestimmung von löslichen Proteinen, siehe z. B. Methods in Food Analysis, 2nd ed., Maynard A. Joslyn, Academic Press (1970), 630 seq., d.h. beispielsweise durch Messen der optischen Dichte: Es werden zu diesem Zweck aus dem Reaktionsgemisch in regelmässigen Zeitabständen Proben entnommen, diese mit 15 %-iger Trichloressigsäure versetzt, Unlösliches abzentrifugiert und die optische Dichte der Lösung bei 280 nm gemessen. Die Reaktion kann für den vorliegenden Zweck als abgeschlossen gelten, wenn keine signifikante Zunahme der optischen Dichte mehr festgestellt werden kann. Zweckmässigerweise wird zu diesem Zeitpunkt dann auch abgebrochen.

Die Substratkonzentration [d.h. Konzentration des trockenen Ausgangsmaterials] kann recht hoch sein: Sie liegt z. B. bei ca. 20 bis ca. 50 Gew.-%. Der pH-Wert des Mediums liegt zweckmässigerweise zwischen 5 - 7, vorzugsweise um ca. 6,5 bis ca. 7; doch kann auch in schwach saurem, also z. B. bei pH 5, oder schwach alkalischem Milieu, z. B. bei pH 7,5 gearbeitet werden.

Die erfindungsgemässe Inkubationstemperatur liegt im Bereiche von 30 bis 60° C, insbesondere 50 bis 60° C. Die Proteolyse ist bei Verwendung von handelsüblichen Proteasen im allgemeinen nach wenigen, z. B. 5 bis 24 Stunden abgeschlossen.

Die geeignete Substratkonzentration liegt, wie oben gesagt, im allgemeinen bei ca. 20 bis ca. 50 Gew.-%. Sie beträgt beispielsweise bei Sojafluff W-200 und Sojamehlen ähnlicher Spezifikationen zweckmässigerweise ca.

20 bis ca. 30 % (W/V). Die obere Grenze ergibt sich aus praktischen Erwägungen: Es soll während der Enzymolyse nicht zu Klumpenbildungen kommen.

Erfindungsgemäss wird nun das vorbehandelte Sojamehl, also das wässrige Proteolysat, erhitzt.

Das vorbehandelte Sojamehl stellt ein gelblich bis bräunliches Konzentrat dar. Es kann direkt in Form dieses Konzentrats, z. B. eines ca. 20 - 30 %-igen Konzentrats, als Reaktionsprodukt der enzymatischen Proteolyse zum (weiteren) Erhitzen eingesetzt werden. Es muss demnach nach der Proteolyse nicht abgetrennt werden, was eine äusserst rationelle Produktion erlaubt.

Das gewünschte Aroma bildet sich im vorliegenden Fall, wenn das enzymatisch vorbehandelte Sojamehl auf die bei der bekannten nicht-enzymatischen Bräunungsreaktion, der klassischen Maillard-Reaktion [d.h. Reaktion von Aminosäuren mit Zuckern, bzw. Bruchstücken von Peptiden bzw. Proteinen mit Zuckern, siehe z. B. Food Res. 25, (1960), 491 - 594, und auch Römpps Chemie-Lexikon. Band 4, Seiten 2464/2465, 8. Auflage Franckh'sche Verlagshandlung, Stuttgart (1985)] üblichen Temperaturen, also auf Temperaturen von 140° bis 200°C, im besonderen auf etwa 140°C bis 180°C, speziell auf ca. 170°C erhitzt wird. Der Druck beträgt dabei 10 - 30, insbesondere ca. 15 - 20 Bar.

Die Erhitzungszeit ist normalerweise umgekehrt proportional zur Temperatur; sie beträgt zweckmässigerweise etwa 1/2 bis 5 Stunden.

Die erfindungsgemäss erhältlichen Produkte werden nach Beendigung der Reaktion von den in Wasser unlöslichen restlichen Partikeln, insbesondere den (Reaktions)Produkten (der Maillard-Reaktion) abgetrennt: Es hat sich nämlich gezeigt, dass die unlöslichen Partikel insbesondere auf die Güte des Aromas einen negativen Einfluss haben. Deren Abtrennung geschieh durch Filtration oder Zentrifugieren.

Isoliert, filtriert bzw. abgetrennt wird unter Zuhilfenahme von Druckfiltern (batch - oder kontinuierlicher Betrieb), Filternutschen. Dekantern, Mikro- oder Ultrafiltern, z. B. der Firma Westfalia oder Alfa-Laval, oder mittels Zentrifugen, z. B. Becherzentrifugen oder Korbzentrifugen. Der Filterkuchen wird hierauf zweckmässigerweise nochmals in Wasser aufgeschlämmt, um zusätzliches wasserlösliches Material zu gewinnen. Die vereinigten Filtrate bzw. Zentrifugate werden alsdann konzentriert, z. B. mittels Plattenverdampfern oder Umlaufverdampfern, zweckmässigerweise auf eine Konzentration von ca. 50 - 75° Brix, oder pulverisiert. Das Pulverisat wird hierbei zweckmässigerweise durch Sprühtrocknen, Vakuumtrocknen, Gefriertrocknen (Lyophilisieren) oder Walzentrocknen gewonnen.

Die erfindungsgemäss erhältlichen Produkte, also die Produkte einer definierten enzymatischen Hydrolyse (einer Proteolyse) und einer Bräunungsreaktion stellen nun überraschenderweise hochkonzentrierte Kaffee-Aromastoffe dar, die sich auf an sich bekannte Art verdünnen bzw. in essbaren Materialien verteilen lassen. Sie können nach an sich bekannten Methoden in die üblichen Gebrauchsformen, wie Lösungen. Pasten oder Pulver übergeführt werden. Als Trägermaterialien kommen z. B. in Frage: Gummi arabicum oder - vorzugsweise - Maltodextrine. Die Formulierung solcher Aromen, sowie die Aromatisierung von Nahrungsmitteln kann im übrigen auf an sich bekannte Art und Weise (vgl. J. Merory; Food flavorings, Composition, manufacture and use; Avi Publ. Co., Westport 1968) vorgenommen werden.

Die nachstehende Tabelle enthält Angaben über geeignete Konzentrationsbereiche für verschiedene Anwendungsformen der erfindungsgemäss erhältlichen Aromen in Geschmackstoffkompositionen:

| Anwendungsform | allgemein | bevorzugt |
|---|---|---|
| | [Prozentgehalt der erfindungsgemäss hergestellten Aromen (in Gewichts-%) in der gewünschten Geschmackstoffkomposition] | |
| Lösungen | 1 - 100 % | 10 - 60 % |
| Pasten | 1 - 100 % | 10 - 90 % |
| Sprühgetrocknete Pulver | 3 - 100 % | 15 - 85 % |
| lyophilisierte vakuumgetrocknete Pulver | 2 - 100 % | 8 - 18 % |

Die erfindungsgemässen Geschmackstoffkompositionen können beispielsweise bei der Herstellung bzw. Aromatisierung der verschiedensten Produkte aus dem Bereich der Nahrungsmittel, der Convenience-Erzeugnisse (Convenience Foods), der instantisierten Lebensmittel (Instant-Produkte), Genussmittel und der Aromen verwendet werden.

Beispiele sind: Kaffee, Kaffeeextrakt, Pulverkaffee, Kaffeesurrogat (Ersatzkaffee), Kaffeeliköre, Dauerbackwaren wie Kuchen, Kekse, Waffelfüllungen, Dessertpulver, Speiseeis, Schokolade, Füllungen gefüllter Schokolade, Pralinenfüllungen, Schokoladenpulver, Kuvertüre, Fettglasur, Marzipan, Milchmischprodukte, Milcherzeugnisse, Kakaopulver, Kakaopulverhaltige Zubereitungen, Kaffee-, Nuss-, Nougat-, Caramelaromen, etc.

Beispiele von zweckmässigen Konzentrationsbereichen (in Gewichtsprozenten) der erfindungsgemässen Aromen für verschiedene Verwendungen:

|  | allgemein | bevorzugt |
|---|---|---|
| Instant-Kaffee<br>(z. B. ein Instant-<br>Kaffeegemisch: erfin-<br>dungsgemässes<br>Aroma/konventioneller<br>Instant-Kaffee =1 : 1) | 01 - 1,5 % | 0,3 - 1 % |
| Schokolade | 0. 1 - 1,5 % | 0,3 - 1 % |
| Waffelfüllung | 0,5 - 1,0 % | ~ 1 % |
| Fertigdessert | 0,5 - 1,0 % | ~ 1 % |
| Yoghurt | 0,1 - 1,0 % | 0, 6 - 0,8 % |
| Speiseeis | 0.5 - 1,0 % | ~ 1 % |

Daraus ist ersichtlich, dass die zweckmässige Konzentration der erfindungsgemässen Produkte etwa der Konzentration von herkömmlichem, löslichen Kaffeepulver entspricht.

Die erfindungsgemäss erhältlichen Produkte können als vollwertiger Kaffee-Ersatz dienen oder aber - vorzugsweise - zum Verbessern, Verändern bzw. Verstärken des Aromas von Kaffeerzeugnissen und Kaffeearomen dienen. Auf diese Weise kann auf einfache Art Sorten-Variation erzielt werden, indem handelsübliche Produkte mit beliebigen Mengen - im Falle von Instant-Kaffee vorzugsweise bis zu ca. 50 % (G/G) - der erfindungsgemäss erhältlichen Produkte gemischt werden.

Die Menge der erfindungsgemässen Aromastoffe im aromatisierten Produkt kann generell ungefähr 0,05 bis ungefähr 10 %, vorzugsweise ungefähr 0,1 bis 4 % betragen.

Was den Geschmackscharakter betrifft, gilt folgendes:

Je höher die Temperatur und je länger die Dauer der Maillard-Reaktion, umso mehr tritt die typische, stark aromatische Röstnote des echten Kaffees in den Vordergrund. Falls hingegen mildere Noten erwünscht werden, drängen sich tiefere Temperaturen und kürzere Reaktionszeiten auf.

Die Herstellung von Aromastoffen aus Proteinen durch Hitzebehandlung ist zwar bekannt, aber aus der Zusammenstellung der wesentlichen Parameter der bekannten Verfahren sind die wesentlichen Unterschiede zum neuen Verfahren sofort ersichtlich:

Stand der Technik

| Ref. | Geschmacks richtung | Proteolyse | Proteasen mikrobiellen Ursprungs | Soja | Anwesenheit von Kohlehydraten | Kohlenhydratzugabe in Falle von Soja |
|---|---|---|---|---|---|---|
| Dok. I | Schokolade, Kaffe, Tee | Hitzebehandlung schwach sauer | nein | keine Erwähnung | immer | Soja nicht erwähnt |
| Dok. II | Schokolade | H+, CH- enzymatisch | nein | wird erwähnt | immer | immer, siehe Bei- spiele 4, 7, 11 |

Dok. I = US-PS-3 102 817
Dok. II = FR-A-1 206 821

**Beispiel**

<u>Enzymolyse</u>

349,5 l Wasser werden in einen sauberen Autoklaven gegeben und auf 50 - 55°C erhitzt. Man gibt unter gutem Rühren 0,5 kg Rhozym P-53 [oder auch 0,5 kg Neutrase] zu, hierauf 150 kg Sojamehl (Sojafluff W-200 der Firma Central Soja, Fort Wayne, Indiana). Um Klumpenbildung zu verhindern, erstreckt man die Zugabe des Sojamehls auf 30 Minuten. Man hält hierauf das Reaktionsgemisch 16 Stunden unter gutem Rühren bei 50°C.

<u>Bräunungsreaktion</u>

Der Autoklav wird zunächst innert einer Stunde mittels Dampf von 6 Bar auf 90 - 95°C aufgeheizt. Hierauf wird mittels Dampf von 20 Bar innert ca. 1 1/2 Stunden auf 168 - 170°C erhitzt. Man hält diese Temperatur - für ein Produkt mit starker Röstnote z. B. 3 Stunden - und prüft den Fortgang der Bräunungsreaktion durch Probenahme und sensorische Prüfung zu jeder vollen Stunde. Der Innendruck steigt während der Bräunungsreaktion auf ca. 25 Bar. Zwecks Konstanthalten des Druckes kann das Druckventil auf einen Wert von ca. 10 - 15 Bar eingestellt werden. Nach Beendigung der Bräunungsreaktion wird rasch auf 50°C abgekühlt und das Reaktionsgemisch unter Zuhilfenahme des Restdruckes aus dem Autoklaven ausgetragen.

<u>Aufarbeitung</u>

Die 470 kg rohe Biobase wird partienweise in einer Ferrum-Korbzentrifuge [Ferrum AG. Rupperswil], bei 800 g abgetrennt [Es kann aber auch via Druckfilter, Dekanter oder Separator isoliert werden].

Nach Zentrifugieren von 4 Partien (ca. 100 l Rohmaterial), wird der Zentrifugenkuchen mit 20 Liter Wasser gewaschen und aufbewahrt. Auf diese Weise werden 360 Liter Filtrat und 100 kg feuchter Filterkuchen erhalten. Der Filterkuchen wird in 200 l Wasser unter kräftigem Rühren suspendiert. Es wird wiederum zentrifugiert, die Ausbeute beträgt nun 200 l Filtrat und 95 kg Filterkuchen (49 % trockene Materie). Die kombinierten Filtrate (560 Liter) weisen eine Konzentration von 75,6 kg Trockenmaterial (13,5° Brix; Bestimmung mittels Aerometer oder Refraktometer) auf. Man konzentriert kontinuierlich bei 25 Millibar und 45 - 48°C unter Zuhilfenahme eines APV-Plattenverdampfers [Ott AG, CH - 3076 Worb]. Man erhält 115,7 kg eines viskosen Sirups, der 63 % Trockenmaterie enthält; Ausbeute 77,1 % (bezogen auf das eingesetzte Sojamehl). Der erhaltene Sirup (65 % Brix) kann

a)   direkt zu Aromatisierungszwecken eingesetzt werden.
     oder
b)   zur Herstellung von Lösungen und Pasten dienen,
     oder
c)   zu Pulvern getrocknet werden.

Aromatisierung
Durch Zugabe eines lyophylisierten Pulvers (LP) in einer Konzentration von 0,3 % - 0.5 % zu Milch mit 3 % Zuckergehalt wird ein wohlschmeckender Milchkaffee gewonnen.

Vergleichsversuche
Dieses wasserlösliche, lyophylisierte Pulver wurde im folgenden mit den Produkten von zwei neueren einschlägigen Verfahren sensorisch verglichen.
     A. Gemäss Verfahren der GB-A-2 046 076A (British Soy Product Ltd.) werden die Sojabohnen vorgängig des Röstens zunächst mit Dampf behandelt. Es folgt Trocknung, Aufbrechen der Hüllen und Rösten, Mahlen. Die Nacharbeitung des Beispiels 1 liefert ein Material, das nun mit dem Material LP sensorisch verglichen wurde.
     Als Rohmaterial wurde verwendet:

Sojabohnen B
Produkt:    BIONA Sojabohnen aus biologischem Anbau
Vertrieb:   MORGA AG, CH 9642 Ebnat-Kappel

Sojabohnen D
Produkt:    Dr. Dünner's Sojabohnen
Vertrieb:   Die Reformhäuser Zürichs

Sojabohnen G
Produkt:    Kleine grüne Sojabohnen (zum Selbstkeimen)
Vertrieb:   MORGA AG, CH-9642 Ebnat-Kappel

Die Verköstigung wurde in beiden Fällen zu 0,1 % und 0,2 % in 3 % Zuckerwasser bei Raumtemperatur vorgenommen.
     Zwar können so auch in den wässrigen Proben der bekannten Aromastoffe Kaffee-, Caramel- und Schokoladenoten festgestellt werden, aber daneben auch - den Geschmack eindeutig beeinträchtigende - Nebennoten, nämlich brenzlig, nach abgestandenem Kaffee (ex Sojabohnen D und G), phenolig, leicht teerartig, nach Tabak [Aschenbechergeschmack] (ex Sojabohnen B).
     Es sind wohl diese letzteren Noten, die die Erfinder veranlassten, zu empfehlen, nur 2 - 5 % des Caramel-, Kaffee- oder Schokoladearomas von aromatisierten Lebensmitteln durch die beschriebenen Aromastoffe zu ersetzen.
     Diese geringe Konzentration ist denn auch, da unwirtschaftlich, der grösste Nachteil des bekannten Verfahrens.
     Die Nebennoten entstehen wohl dadurch, dass die Dampfbehandlung zwar ebenfalls eine gewisse thermische Zerstörung der Proteine zur Folge hat, es werden wohl auch in diesem Fall Percursoren für die Maillard-Reaktion gebildet: Dieses Quellen und Keimen der Bohnen unter Einfluss von bloss Feuchtigkeit und Hitzeeinwirkung kann jedoch eine kontrollierte enzymatische Hydrolyse von - gemahlenen und entölten - Bohnen, also von entfettetem Sojamehl nie ersetzen.
     B. Gemäss Verfahren der US-PS-4 187 324 (Shirbroun) werden die grünen Sojabohnen eingeweicht, zwecks Entfernung des Öls zerkleinert, vorgetrocknet, gemahlen, geröstet und pulverisiert.
     Als Ausgangsmaterialien für die Nacharbeitung wurden die folgenden drei Sorten Sojabohnen verwendet:

Sojabohnen B
Sojabohnen D
Sojabohnen G

und schliesslich

5

r Sojaschrot SAIS
r Produkt:   Sojaschrot SAIS
Vertrieb:   SAIS AG, CH - 6048 Horw
Wasseranteil10 %

Das Produkt des nachgearbeiteten "Example" gebrauter Kaffee - 0,2 % in 3 % Zuckerwasser - wurde wie folgt verköstigt.

Die jeweils erhaltenen gemahlenen Röstprodukte wurden eingewogen, mit 3 %-igem Zuckerwasser versetzt, bei Raumtemperatur 30 Minuten stehengelassen und das Gemisch vor der Verköstigung durch einen Faltenfilter filtriert und so von den noch vorhandenen Feststoffen separiert.

| Bezeichnung der Proben | Beschreibung des Aromas |
|---|---|
| G | Geschmack: Weisskohl (schweflig) Gemüsebouillon, cerealienmalzig, Schokolade |
| | Geruch: Weisskohl, Gemüsebouillon |
| B | Geschmack:schwach, leicht cerealienartig, Karton, Papier |
| | Geruch:schwach, leichte Röstnote |
| D | Geschmack:schwach, cerealienartig, malzig, leicht nach Caramel, leichte Röstnote |
| | Geruch:schwach russig |
| S | Geschmack:schwach, cerealienartig, malzig, Nachgeschmack nach Papier und Karton |
| | Geruch:cerealienartig, nach Haferflocken |

Referenzprobe:
lyophylisiertes Pulver LP 0,2 % in 3 % Zuckerwasser bei Raumtemperatur (eine besonders gut geeignete Methodik zur genauen Unterscheidung von Geschmacksnoten):
Aroma: malzig, nach Milchkaffee, nach Biokaffee, "Gesundheitskaffee", Lakritze im Nachgeschmack.

Auch im Rahmen der vorliegenden Arbeiten wurde natürlich zunächst versucht, ohne den Proteolyseschritt zum Ziel zu gelangen: Dabei wurde immer wieder festgestellt, dass so hergestellte Aromenkompositionen bei weitem nicht die gesuchten typischen Kaffee-aromanoten aufweisen.

Die enzymatische Behandlung von Sojamehl andererseits ist jedoch bisher insbesondere im Falle der Gewinnung von HVP (hydrolysed vegetable proteins)-Produkten bekanntgeworden. Diese bekannten Produkte finden vor allem für das Würzen von Suppen und Saucen Verwendung, aber auch ein neuartiger Soy bean sake, die Proteinanreicherung von Soft drinks und spezielle Diäten im Spitalsektor können hier genannt werden:

siehe auch J. Schormüller, Lehrbuch der Lebensmittelchemie. Springer-Verlag, Berlin, (1961), Seiten 280 - 283.

Tony Godfrey, Jon Reichelt, Industrial Enzymology, The Application of Enzymes in Industry, The Nature Press and the Mc Millan Publ. Ltd., (1983).

Gerald Reed, Enzymes in Food Processing, Academic Press, NY and London, (1966), Seite 369

und Iida and Sakamoto, Develop. Ind. Microbiology, Vol. 4, (1963), Seiten 159 - 165.

**Patentansprüche**

1. Verfahren zur Herstellung von Kaffeearomastoffen, dadurch gekennzeichnet, dass man Sojamehl enzymatisch unter Verwendung von Proteasen mikrobiellen Ursprungs in einem Temperaturbereich von 30 - 60°C proteolysiert, das Proteolysat auf 140° - 200°C unter einem Druck von 10 - 30 Bar erhitzt und das erhaltene wasserlösliche Material unter Zuhilfenahme von Druckfiltern, Filternutschen, Dekantern, Mikro- oder Ultrafiltern, oder mittels Zentrifugen aus dem Reaktionsprodukt isoliert.

EP 0 210 999 B1

2. Verfahren nach Anspruch 1, dadurch gekennzeichnet, dass man bei 50 - 60°C proteolysiert.

3. Verfahren nach einem der Ansprüche 1 und 2, dadurch gekennzeichnet, dass man das Proteolysat auf 140° bis 180°C erhitzt.

4. Verfahren nach einem der Ansprüche 1 bis 3, dadurch gekennzeichnet, dass man das isolierte Material auf eine Konzentration von 50 - 75° Brix einengt, oder dass man das isolierte Material pulverisiert.

5. Kaffeearomastoff auf Sojamehlbasis, erhältlich nach dem Verfahren der Ansprüche 1 bis 4.

6. Geschmackstoffkomposition, gekennzeichnet durch ein Gehalt an einem Aromastoff gemäss Anspruch 5.

7. Nahrungs- und Genussmittel, enthaltend einen Aromastoff gemäss Anspruch 5 bzw. eine Geschmackstoffkomposition gemäss Anspruch 6.

8. Verwendung von Aromastoffen gemäss Anspruch 5 bzw. von Geschmackstoffkompositionen gemäss Anspruch 6 zur Aromatisierung von Nahrungs- und Genussmitteln, bzw. als Kaffee-Ersatz.

**Claims**

1. A process for the manufacture of coffee flavourants, characterized by enzymatically proteolyzing soya meal using proteases of microbial origin in a temperature range of 30 - 60°C, heating the proteolyzate to 140 - 200°C under a pressure of 10 - 30 bar and isolating the resulting water-soluble material from the reaction product with the aid of pressure filters, suctions filters, decanters, micro- or ultrafilters or by means of centrifuges.

2. A process according to claim 1, characterized in that the proteolysis is carried out at 50 - 60°C.

3. A process according to either of claims 1 and 2, characterized in that the proteolyzate is heated to 140° to 180°C.

4. A process according to any one of claims 1 to 3, characterized in that the isolated material is concentrated to a concentration of 50 - 75° Brix or in that the isolated material is pulverized.

5. A coffee flavourant based on soya meal, obtainable according to the process of claims 1 to 4.

6. A flavourant composition, characterized by a content of a flavourant in accordance with claim 5.

7. A foodstuff and semi-luxury consumable, containing a flavourant in accordance with claim 5 or a flavourant composition in accordance with claim 6.

8. The use of flavourants in accordance with claim 5 or of flavourant compositions in accordance with claim 6 for the flavouring of foodstuffs and semi-luxury consumables, or as coffee substitutes.

**Revendications**

1. Procédé pour préparer des arômes pour café, caractérisé en ce que l'on effectue par voie enzymatique une protéolyse de farine de soja, en utilisant des protéases d'origine microbienne, dans un domaine de température de 30 à 60°C, l'on chauffe le protéolysat à 140° - 200°C sous une pression de 10 à 30 bars, et l'on isole du produit de réaction la matière soluble dans l'eau obtenue, à l'aide de filtre-presses, de filtres Büchner, de décanteurs, de microfiltres ou d'ultrafiltres, ou par centrifugation.

2. Procédé selon la revendication 1, caractérisé en ce que l'on effectue la protéolyse à 50 - 60°C.

3. Procédé selon l'une quelconque des revendications 1 ou 2 caractérisé en ce que l'on chauffe le protéolysat de 140 à 180°C.

4. Procédé selon l'une quelconque des revendications 1 à 3, caractérisé en ce que l'on concentre la matière isolée jusqu'à 50 - 75° Brix, ou en ce que l'on pulvérise la matière isolée.

5. Arôme pour café à base de farine de soja, obtenu selon le procédé conforme à l'une quelconque des revendications 1 à 4.

6. Composition gustative caractérisée en ce qu'elle contient un arôme conforme à la revendication 5.

7. Aliment et stimulant, comportant un arôme conforme à la revendication 5 ou une composition gustative conforme à la revendication 6.

8. Utilisation d'arômes selon la revendication 5 ou de compositions gustatives selon la revendication 6 pour aromatiser des aliments et des stimulants, ou pour remplacer le café.

7